(19) Europäisches Patentamt

European Patent Office

Office européen des brevets

(11) **EP 1 728 967 A1**

(12) **DEMANDE DE BREVET EUROPEEN**

(43) Date de publication:
**06.12.2006 Bulletin 2006/49**

(51) Int Cl.:
*E21B 41/00* [(2006.01)]

(21) Numéro de dépôt: **06290751.4**

(22) Date de dépôt: **05.05.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **03.06.2005 FR 0505612**

(71) Demandeur: **Institut Français du Pétrole**
**92852 Rueil Malmaison Cédex (FR)**

(72) Inventeurs:
• **Fornel, Alexandre**
**92500 Rueil-Malmaison (FR)**
• **Mezghani, Mokhlès**
**92500 Rueil-Malmaison (FR)**
• **Jaffre, Jérôme**
**78860 Saint-Nom-La-Bretèche (FR)**

(54) **Méthode pour mettre à jour un modèle géologique par des données sismiques et de production**

(57)    - L'invention concerne une méthode permettant de prédire la production d'un réservoir souterrain, comportant la génération et la mise à jour d'un modèle géologique paramétré à partir de données de production et de données de sismique, en particulier 4D. Selon la méthode, on simule des données de production à partir du modèle géologique et d'un simulateur d'écoulement, et on en déduit un modèle pétro élastique en profondeur. On définit alors un modèle de conversion profondeur/ temps, à l'aide duquel on convertit en temps le modèle pétro élastique. Le modèle est ajusté en corrigeant le décalage induit par la conversion profondeur/temps et en recalant le modèle. On optimise le modèle géologique en comparant, à travers une fonction objectif, les mesures réelles aux réponses de simulation (réponses en production et attributs sismiques en temps) en mettant à jour, en particulier, le modèle de conversion profondeur/ temps. L'ajustement est réalisé jusqu'à obtenir un minimum pour la fonction objectif. On prédit ainsi la production du réservoir souterrain à partir de simulations d'écoulement réalisées à partir du modèle géologique optimisé.
- Application notamment à l'exploitation de gisements pétroliers par exemple.

Figure 1

EP 1 728 967 A1

**EP 1 728 967 A1**

## Description

La présente invention concerne une méthode pour prédire la production d'un réservoir souterrain par la mise à jour d'un modèle géologique contraint par des données de production et des données sismiques en temps.

Cette méthodologie s'inscrit dans la thématique de la caractérisation de réservoir, qui a pour objectif de fournir des images fiables des réservoirs afin de mieux prédire leur comportement et d'optimiser leur schéma d'exploitation.

## État de la technique

Les documents suivants illustrent l'état de la technique et seront cités par leur numéro de référence dans la description ci-après.

1. F. ANTERION. History matching: a one day long competition: classical approaches versus gradient method. First international forum on reservoir simulation, Alpbach, Austria, 1998.

2. F. ANTERION, R. EYMARD and B. KARCHER. Use of Parameter Gradients for Reservoir History Matching. Symposium on Reservoir Simulation of the Society of Petroleum Engineers, Houston, Texas, 1989.

3. U. G. ARAKTINGI and W. M. BASHORE. Effects of properties in seismic data on reservoir characterization and consequent fluid flow predictions when integrated with well logs. SPE 24752, 67th Annual Technical Conference and Exhibition, Washington DC, USA, 1992.

4. A. BAMBERGER, G. CHAVENT, and P. LAILLY. Une application de la théorie du contrôle à un problème inverse de sismique. Les annales de Géophysique Vol. 3, 1977.

5. R. BISSEL. Calculating Optimal Parameters for History Matching. 4th European Conference on the Mathematics of Oil Recovery, Roros, Norway, 1994.

6. R. BISSEL, J. E. KILLOUGH and Y. SHARMA. Reservoir history matching using the method of gradients on a workstation. SPE 24265, Stavanger, Norway, 1992.

7. C. BOGAN, D. JOHNSON, M. LITVAK and D. STAUBER. Building reservoir models based on 4D seismic and well data in Gulf of Mexico oil fields. Annual Technical Conference and Exhibition, 2003.

8. J. BRAC, P. Y. DÉQUIREZ, F. HERVÉ, C. JACQUES, P. R. V. LAILLY and D. TRAN VAN HIEU. Inversion with a priori information: an approach to integrated stratigraphic interpretation. 58th Annual International SEG Meeting, Anaheim, California, 1988.

9. P. CARRION. Inverse problems and tomography in acoustics and seismology. Penn Publishing Company, 1987.

10. J. CÉA. Optimisation : théories et algorithmes. Dunod, 1971.

11. M. CHARARA, I. MAGNIANT, Y. MANIN, J.-P. DELHOMME and N. EBERLÉ. The benefit of coupling geophysical inversion problems with fluid flow simulation. ECMOR VII, Baveno, Lago Maggiore, Italy, 2000.

12. G. CHAVENT. Analyse fonctionnelle et identification des coefficients répartis dans les équations aux dérivées partielles. PhD Thesis, Université Paris VI, 1971.

13. G. CHAVENT. Identifiability of parameters in output least square formulation. New York. 1987.

14. G. CHAVENT, M. DUPUY and P. LEMONNIER. History matching by use of optimal theory. SPE 4627, Las Vegas, Nevada, 1973.

15. L. COSTA-REIS, G. DE MARSILY, and R. ESCHARD. Intégration de données dynamiques dans un modèle géostatistique de réservoir. PhD Thesis, Université Paris VI, 2000.

16. J.-E. DENNIS and R.-B. SCHNABEL. Numerical Methods for Unconstrained Optimization and Non-Linear Equation. Englewood Cliffs, New Jercy. 1983.

17. P. Y. DEQUIREZ and V. RICHARD. Application of Inversion to Integrated Stratigraphic Interpretation. Revue de l'Institut Français du pétrole, Vol. 45, n° pp. -397, 416. 1990.

18. P.F. EDOA. Inversion de formes géologiques en ingénierie de gisements en utilisant les données de production. PhD Thesis, Université Paul Sabatier, 1999.

19. G. S. FEITOSA, L. CHU, L. G. THOMPSON and A. C. REYNOLDS. Determination of permeability distribution from well test pressure data. SPE 26047, 1993.

20. R. FLETCHER. Practical Methods of Optimization. New York. 1987.

21. F. GASSMANN. Über die Elastiztät Poröser Medien. Vierteljahrresschr.Naturforschung Gesellschaft Vol. 96, pp. 1-23, Zurich, 1951.

22. O. GOSSELIN, A. COMINELLI, S. VAN DER BERG and S.-D. CHOWDHURY. A gradient-based approach for history matching og both production and 4D seismic data. ECMOR VII, Baveno, Lago Maggiore, Italy, 2000.

23. D. GUÉRILLOT and W. BEYDOUN. Reservoir boundary identification from seismic imaging for well test analysis. SPE 26463, 68th Annual Technical Conference and Exhibition, Houston, Texas, USA, 1993.

24. L.-Y. HU. Gradual deformation and iterative calibration of Gaussian-related Stochastic Models. Mathematical Geology Vol. 32, pp. 87-108, 2000.

25. L.-Y. HU. Combinaison of dependent realizations within the Gradual Deformation Method. Mathematical Geology Vol. 34, pp. 953-963, 2002.

26. L.-Y. HU and G. BLANC. Constraining a reservoir facies model to dynamic data using a gradual deformation method. 6th Conference on the Mathematics of Oil Recovery, Peebles, 1998.

27. P. JACQUARD and C. JAIN. Permeability distribution from field pressure data. SPE Journal pp. 281-294, 1965.

28. P. JACQUARD and C. JAIN. Recherche sur l'interprétation des mesures de pression. 2ème Colloque de l'ARTFP, Rueil-Malmaison, France, 1965.

29. J. W. JENNINGS, D. S. MC GREGOR and R. A. MORSE. Simultaneous determination of capillary pressure and relative permeability by automatic history matching. SPE 14418, 1988.

30. A.-G. JOURNEL and DEUTSCH C.-V. Power Averaging for block effective permeability. SPE Vol. 15128, 56th California Regional Meeting of the Society of Petroleum Engineers , Oakland. 1986.

31. V. KRETZ, M. LE RAVALEC-DUPIN and F. ROGGERO. An integrated reservoir characteriztion study matching production data and 4D seismic. Annual Technical Conference and Exhibition, 2002.

32. G. KRUNETZ. Quelques exemples d'analyse d'enregistrements sismiques. Geophysical Prospecting Vol. 11, pp. 409-422, 1963.

33. J. LANDA and R. HORNE. A procedure to integrate well test data, reservoir performance history and 4D Seismic information into a reservoir description. SPE 38653, Annual Technical Conference and Exhibition, San Antonio, TX, USA, 1997.

34. M. LAVERGNE. Méthodes sismiques. Ecole Nationale Supérieure du Pétrole et des Moteurs, Editions Technip, Paris. 1986.

35. M. LE RAVALEC, NOETINGER BENOÎT, and L.-Y. HU. The FFT Moving Average (FFT-MA) generator : an efficient numerical method for generating and conditioning Gaussian Simulation. Mathematical Geology Vol. 32, pp. 701-723, 2000.

36. M. LE RAVALEC-DUPIN and B. NOETINGER. Optimization with the Gradual Deformation Method. Mathematical Geology Vol. 34, No. 2, pp. 125-142, 1-2-2002.

37. J. L. LIONS. Contrôle optimal de systèmes gouvernés par des équations aux dérivées partielles. Dunod, 1968.

38. F. MANSANNÉ. Algorithmes génétiques : Applications à l'inversion sismique et à l'extrapolation. PhD Thesis, UPPA, Pau, 2000.

39. M. MEZGHANI, A. FORNEL, V. LANGLAIS and N. LUCET. History Matching and Quantitative Use of 4D Seismic Data for an Improved Reservoir. SPE 90420, 2004.

40. M. MEZGHANI, A. FORNEL, V. LANGLAIS and N. LUCET. Quantitative Use of 4D Seismic Data For Geological Modeling & Reservoir Characterization Through History Matching. Paris, 2004.

41. M. MEZGHANI, F. ROGGERO and J. P. RAYMOND. Optimal location of pilot points in history matching. ECMOR VII, Baveno, Italy, 2000.

42. R. W. NELSON. In place measurement of permeability in heterogeneous media; Theory of a proposed method. Geophys.Res. Vol. 66(5), pp. 2469-2478, 1960.

43. D. RAHON, G. BLANC and D. GUÉRILLOT. Gradient method constrained by geological bodies for history matching. SPE 36568, 1996.

44. R. RAMAMOORTHY, W. F. MURPHY and C. COLL. Total Porosity Estimation in Shaly Sands From Shear Modulus. SPWLA 36th Annual Logging Symposium Transactions., 1995.

45. P. RENARD and G. DE MARSILY. Calculating Equivalent Permeability : a Review. Advances in Water Ressources, Vol. 20, n° 5-6, pp. 253-278, 1997.

46. F. ROGGERO and D. GUÉRILLOT. Gradient Method and Bayesian Formalism - Application to Petrophysical Parameter Characterization. 5th ECMOR, Leoben, Austria, 1996.

47. S. RONEN, C. ECONOMIDES and VARVIK. Synergetic interpretation of well tests and seismic data for reservoir characterization. 54th EAEG Meeting, Paris, France, 1992.

48. B. H. RUSSEL. Introduction to seismic inversion methods. SEG 1988.

49. A. TARANTOLA. Inverse Problem Theory: Method for Data Fitting and Model Parameter Estimation. Elseiver. 1987.

50. X. H. WEN and J. J. HERNANDEZ. Upscaling Hydraulic Conductivities in Heterogeneous Media : an Overview. Journal of Hydrology, Vol. 183, n° pp. 9-32, 1996.

51. T. YAO and A.-G. JOURNEL. Porosity modeling in a W. Texas carbonate reservoir conditionned to seismic data: solving the difference of scale problem. SPE, Annual Technical Conference and Exhibition, 1998.

52. I. ZABALZA, G. BLANC, D. COLLOMBIER and M. MEZGHANI. Use of experimental design in resolving inverse problems - Application to history matching. ECMOR VII, Baveno, Italy, 2000.

Pour la mise à jour des modèles géologiques, l'intégration des données dynamiques s'appuie sur la théorie des problèmes inverses. Certains paramètres, comme la porosité ou la perméabilité, du modèle géologique sont ajustés de façon itérative pour caler à des données d'observation, comme les données de production par exemple. Comme dans tous problèmes inverses, il n'y a pas unicité de la solution. Pour réduire les incertitudes sur la prévision de production, il est nécessaire d'intégrer plus de données d'observation (données diagraphiques, de production, sismiques,...) ce qui permet de mieux contraindre les modèles.

La méthode selon l'invention permet une intégration simultanée de plusieurs types de données, quelles soient statiques ou dynamiques. Ceci permet de réduire considérablement l'espace des modèles géologiques admissibles et donc de mieux prédire le comportement des réservoirs étudiés. Certaines méthodes mettent déjà en oeuvre l'intégration jointe des données de production et de sismique 4D dans le calage d'historique [voir les références 7, 31, 39], mais ces travaux décrivent l'utilisation des données de sismique 4D en profondeur.

Or, les attributs sismiques (en particulier les impédances) sont d'abord exprimés en fonction des temps de trajet des ondes. Ce n'est qu'après une phase de conversion temps/profondeur que les impédances sont exprimées en profondeur. Une des originalités de la méthode selon l'invention présente est de travailler directement avec des attributs sismiques en temps. Cette méthode offre d'ailleurs un autre avantage : non seulement de pouvoir caler les impédances, mais également les temps de trajet sur l'ensemble du réservoir, autrement dit l'épaisseur en temps globale du réservoir.

Une telle méthode nécessite : l'implémentation d'une conversion profondeur/temps pour transcrire en temps les attributs sismiques calculés en profondeur par un modèle pétro élastique, un algorithme de filtrage pour ajuster les valeurs des impédances dans une bande passante proche de celle de la sismique, et diverses méthodes de mises à l'échelle pour travailler entre les différents échelles de mesure.

## La méthode selon l'invention

La présente invention concerne une méthode permettant de prédire la production d'un réservoir souterrain, comportant la génération d'un modèle géologique paramétré à partir de mesures sismiques en temps et de mesures de production, le modèle géologique étant mis à jour par un processus d'inversion. La méthode comporte les étapes suivantes :

- on simule des données dynamiques de production à partir dudit modèle géologique et d'un simulateur d'écoulement ;

- on simule un modèle pétro élastique en profondeur à partir dudit modèle géologique et de ladite simulation d'écoulement ;

- on détermine un modèle de conversion profondeur/temps.

- on convertit ledit modèle pétro élastique en temps ;

- on optimise ledit modèle géologique en comparant, à l'aide d'une fonction objectif, lesdites mesures de production et de sismiques en temps audites réponses en production et audits attributs sismiques en temps simulées en mettant à jours au moins le modèle de conversion profondeur/temps;

- on recommence à l'étape a) jusqu'à obtenir un minimum pour la fonction objectif.

- on prédit la production dudit réservoir souterrain à partir de simulation d'écoulement réalisées à partir dudit modèle géologique optimisée.

La modèle pétro élastique en temps peut être ajusté par correction d'un décalage induit par la conversion profondeur/temps.

Les données dynamiques peuvent être des données de production du réservoir, de pression et de saturation.

Le modèle pétro élastique peut comporter des données issues de sismique 4D.

## Présentation succincte des figures

D'autres caractéristiques et avantages de la méthode selon l'invention, apparaîtront à la lecture de la description ci-après d'exemples non limitatifs de réalisations, en se référant aux figures annexées et décrites ci-après.

- La figure 1 illustre le module direct qui sert à obtenir les réponses de simulation.

- La figure 2 illustre la technique de conversion profondeur/temps utilisée.

- La figure 3 illustre le module inverse.

## Description détaillée de la méthode

La méthodologie proposée consiste à prédire la production d'un réservoir souterrain en développant une boucle d'optimisation autour d'un simulateur d'écoulement, incluant un modèle pétro élastique ainsi qu'un modèle de conversion profondeur/temps pour la simulation des réponses sismiques. Le développement de cette boucle permet d'optimiser un modèle géologique décrit sur un maillage fin, sur lequel s'appuie les prédictions de données de production. La méthode repose sur la théorie des problèmes inverses. Elle peut donc être décomposée en deux modules :

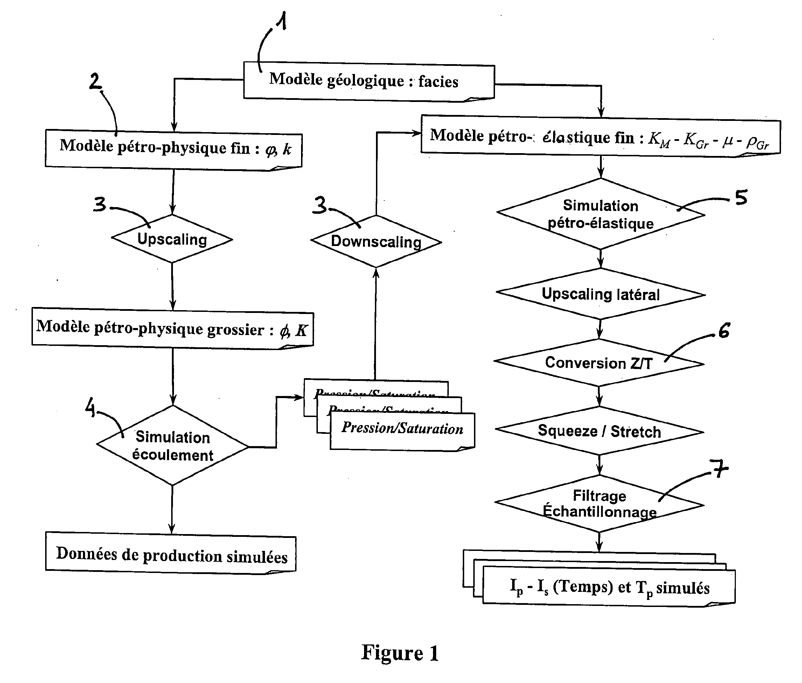

- **Le module direct** (figure 1) : Il permet de construire une chaîne de modélisation permettant la simulation numérique des réponses synthétiques relatives aux données que nous souhaitons intégrer. Ce module direct est constitué de plusieurs algorithmes qui permettent le passage depuis le modèle géologique 1 jusqu'à la simulation des données synthétiques: modélisation géostatistique (modèle pétro physique fin 2), "up" ou "downscaling" 3, simulation d'écoulement 4, simulation pétro élastique 5, conversion profondeur/temps 6, échantillonnage 7, obtention d'attributs sismiques (calcul, filtrage,...), etc.
  Le module direct sert à obtenir les réponses de simulation :

  - réponses en production (débits d'huile, ratio gaz/huile et "water-cut" (ratio eau/huile) pour chaque puits)

  - attributs sismiques en temps (impédances pour les ondes P et S, temps de trajet aller-retour sur l'ensemble du réservoir pour les ondes P).

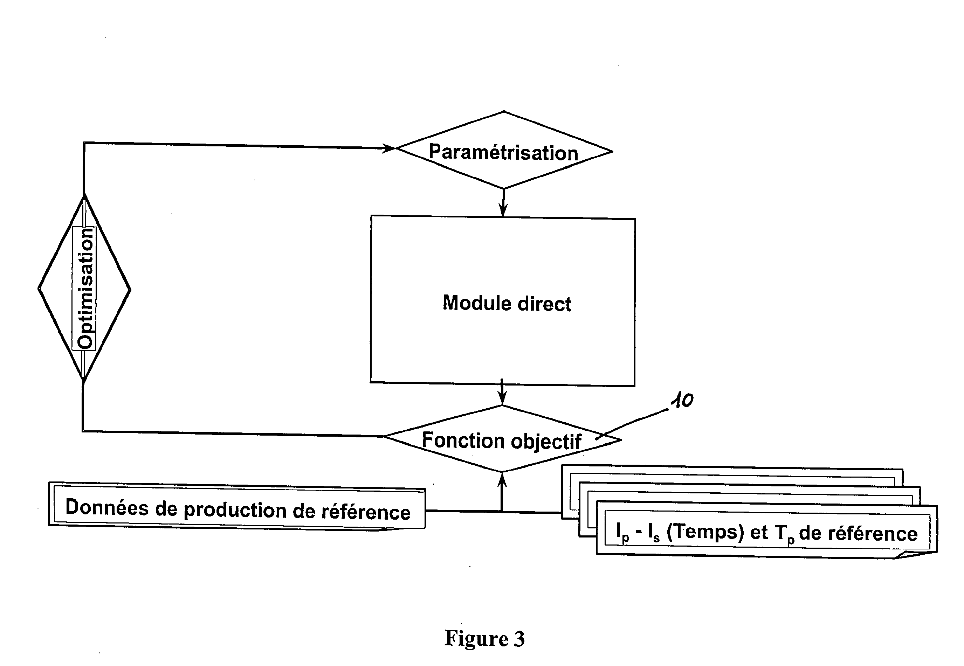

- **Le module inverse** (figure 3) : Il permet de minimiser une fonction objectif 10 qui mesure l'écart entre les résultats de simulation du module direct et les données en modifiant un certain nombre de paramètres du module direct. Ces paramètres peuvent être relatifs :

  - au modèle géologique (distribution des faciès, des porosités et des perméabilités, etc...),

  - au modèle de simulation d'écoulement (perméabilités relatives, skins, etc...),

  - au modèle pétro-élastique (loi de Gassmann, etc...),

  - au modèle de conversion profondeur/temps (loi de vitesse).

Selon un mode de réalisation particulier de l'invention, la boucle d'optimisation est utilisée pour caler les données de production et les données de sismique 4D, par la mise à jour du modèle géologique.

La méthode utilise des données sismiques en temps, c'est-à-dire en fonction des temps de trajet des ondes sismiques, et non pas en fonction de la profondeur. L'enjeu majeur est donc ici l'intégration d'un processus de conversion profondeur/temps avec mise à jour au cours du processus d'optimisation.

**1- Le module direct**

La figure 1 illustre les différentes étapes du module direct.

A)- Détermination des données dynamiques de production

*1) Génération d'un modèle géologique*

La génération du modèle géologique 1 s'effectue avec des outils de modélisation géostatistique [24, 36]. Un modèle géostatistique basé sur un champ Gaussien aléatoire est utilisé pour générer les champs de porosité. Les perméabilités horizontales et verticales sont obtenues avec une technique de co-simulation.

*2) Mise à l'échelle du simulateur ("upscaling")*

Un facteur important pour la simulation d'écoulement est la taille du maillage. Il est toujours préférable de travailler sur une grille de simulation aussi fine que possible afin de capturer les hétérogénéités du réservoir et la distribution spatiale des saturations. Cependant, pour des raisons pratiques évidentes, il convient de faire un compromis entre l'analyse en détail et les capacités et temps de calcul. Ainsi, les simulations d'écoulement sont généralement effectuées sur un maillage grossier, nécessitant une phase de mise à l'échelle pour calculer les propriétés équivalentes du réservoir sur les mailles grossières. De nombreuses techniques analytiques (par exemple, méthode de "moyenne de puissance") ou numériques (résolution d'un problème d'écoulement local) ont été développées [45, 50]. La mise à l'échelle ("upscaling") utilisée est une loi de puissance, ce qui offre la possibilité de choisir une moyenne arithmétique, géométrique ou harmonique [30] :

$$K = \left( \frac{1}{V} \int_V k(x)^p \, dV \right)^{1/p} \qquad (1.1)$$

### 3) Simulation des écoulements

La simulation d'écoulement est nécessaire pour contraindre le modèle géologique par les données de production mesurées aux puits (par exemple ratio gaz/huile, eau/huile (water cut)). Dans l'objectif de calculer les attributs sismiques, les saturations et pressions sont requises comme sorties du simulateur d'écoulement (application des lois de conservation de la masse et de Darcy).

B)- Détermination d'un modèle pétro élastique:

### 1) Mise à l'échelle du modèle géologique ("downscaling")

On procède ensuite à une mise à l'échelle "downscaling" pour transcrire les saturations et pressions du maillage grossier de la simulation d'écoulement au maillage fin du modèle géologique. La méthode proposée se base sur un simple "mapping" sur la grille fine. Des techniques plus sophistiquées pourraient être envisagées, mais le temps de calcul nécessaire deviendrait probablement prohibitif pour le calage d'historique que nous envisageons. Cette étape de mise à l'échelle permettra d'appliquer un modèle pétro élastique à l'échelle du modèle géologique et ce, par faciès, ce qui est bien plus rigoureux que par unité géologique.

### 2) Détermination du modèle pétro élastique

Les impédances de compression et de cisaillement sont définies comme le produit de la densité de la roche saturée de fluide $\rho_B$ (dite roche mouillée) par les vitesses de propagation des ondes sismiques $V_P$ et $V_S$:

$$I_P = \rho_B V_P \ \text{ et } \ I_S = \rho_B V_S \ \text{ avec } \ V_P = \sqrt{\frac{3K + 4\mu}{3\rho_B}} \ \text{ et } \ V_S = \sqrt{\frac{\mu}{\rho_B}} \qquad (1.2)$$

où $K$ désigne le module d'incompressibilité de la roche mouillée et $\mu$ le module de cisaillement.

Par ailleurs, si l'on désire prendre en compte les effets de variation de pression et de saturations sur les vitesses de compression $V_p$ et de cisaillement $V_s$, le modèle de Hertz a été implémenté :

$$V_P(P_c - P_p) = V_P(\Delta P_a) \left( \frac{P_c - P_p}{\Delta P_a} \right)^{h_P} \ \text{ et } \ V_S(P_c - P_p) = V_S(\Delta P_a) \left( \frac{P_c - P_p}{\Delta P_a} \right)^{h_S} \qquad (1.3)$$

avec :

- ■ $P_c$ la pression de confinement,
- ■ $P_p$ la pression de pore,
- ■ $\Delta P_a$ la pression différentielle asymptotique,
- ■ $h_P$ et $h_S$ les coefficients de Hertz pour les ondes P et S.

La première étape est de calculer la densité de la roche mouillée $\rho_B$ par la formule suivante :

$$\rho_B = (1 - \phi)\rho_{Gr} + \phi \rho_F \qquad (1.4)$$

où $\rho_{Gr}$ désigne la densité du grain (définie pour chaque faciès) et $\phi$ la porosité (une constante par faciès ou une valeur par pixel). L'étape de mise à l'échelle "downscaling" permet le calcul de la densité de fluide $\rho_F$ en prenant en compte les effets de pression :

$$\rho_F = \rho_O\left(P_O\right)S_O + \rho_W\left(P_W\right)S_W + \rho_G\left(P_G\right)S_G \qquad (1.5)$$

où $(\rho_O, \rho_W, \rho_S)$, $(S_O, S_W, S_S)$ et $(P_O, P_W, P_S)$ sont les densités, saturations et pressions de phase. Les densités de phases sont déduites de tables pression-densité.

Le calcul du module d'incompressibilité de la roche mouillée $K$ se fait à l'aide des équations de Gassmann [21] :

$$K = K_M + \frac{\left[1 - \dfrac{K_M}{K_{Gr}}\right]}{\dfrac{\phi}{K_F} + \dfrac{1-\phi}{K_{Gr}} - \dfrac{K_M}{K_{Gr}^2}} \quad \text{et} \quad \frac{1}{K_F} = \frac{S_O}{K_O} + \frac{S_W}{K_W} + \frac{S_G}{K_G} \qquad (1.6)$$

où $K_{Gr}$ désigne le module d'incompressibilité du grain (une constante par faciès dépendante de la composition de la roche), $K_F$ le module d'incompressibilité du fluide, $K_M$ le module d'incompressibilité de la matrice poreuse et ($K_O, K_W, K_G$) les modules pour chaque phase (issus de tables pression-module d'incompressibilité).

Le module d'incompressibilité $K_M$ est choisi par l'utilisateur (une constante par faciès généralement issue de mesures préalables en laboratoire), ou peut être issu d'une loi expérimentale qui prend en compte les effets de la porosité [44] :

$$K_M = K_{Gr}\left(3,88 \ \phi^2 \ - \ 3,9 \ \phi \ + \ 1\right) \qquad (1.7)$$

Le module de cisaillement $\mu$ peut également être choisi par l'utilisateur (une constante par faciès également issue de mesures en laboratoire), ou issu d'un modèle expérimental :

$$\mu = \mu_{Gr}\left( 2,19 \ \phi^2 \ - \ 3,48 \ \phi \ + \ 1 \right) \qquad (1.8)$$

C)- Détermination d'un modèle pétro élastique en profondeur

Ainsi, si l'on se donne les modules d'incompressibilité $K_{Gr}$ et $K_M$ ainsi que le module de cisaillement $\mu$ et la densité du grain $P_{Gr}$, on est capable de calculer les vitesses et impédances sismiques en fonction de la profondeur (ou plus précisément en fonction des coordonnées (x,y,z)).

D)- Détermination des attributs sismiques en temps

*1) Mise à l'échelle latérale*

L'objectif suivant est de réconcilier latéralement l'échelle de modélisation avec le pixel sismique. Là encore, nous utilisons une formule de moyenne de puissance, pour effectuer une moyenne arithmétique.

*2) Conversion du modèle pétro élastique en profondeur dans le domaine temps*

L'originalité et le principal challenge de cette méthodologie étant d'intégrer dans le processus de calage d'historique des attributs sismiques en temps, il convient dès lors d'effectuer une conversion profondeur/temps. Un modèle de vitesse permet d'exprimer les impédances, obtenues en profondeur à l'issu du modèle pétro élastique, en fonction du temps de trajet aller-retour des ondes sismiques. Le modèle de vitesse utilisé est calculé par le modèle pétro élastique, ce qui offre l'avantage de mettre à jour la loi de conversion profondeur/temps à chaque itération du processus d'optimisation.

Au cours de cette étape, on calcule les temps de trajet aller-retour au niveau du toit du réservoir. Pour ce faire, on formule quelques hypothèses : on suppose que les vitesses $V_p$ et $V_s$ sont constantes dans le sous-sol, non seulement au niveau de chaque maille du toit mais aussi au cours du temps (c'est-à-dire entre les différentes campagnes sismiques). Par ailleurs, on ne dispose pas de la composition exacte du sous-sol, ni de sa géométrie exacte : une loi de vitesse exacte ne peut donc pas être explicité . Par conséquent, on utilise une relation Temps/Vitesse classique :

$$T_{top}(i,j) = 2\frac{Z_{top}(i,j)}{V_{top}(i,j)} \qquad (1.9)$$

avec :

- ■ $T_{top}(i,j)$ : le temps de trajet aller-retour des ondes P ou S au niveau de la maille ($i$, $j$) du toit du réservoir,
- ■ $Z_{top}(i,j)$ : la profondeur au niveau de cette même maille,
- ■ et $V_{top}(i,j)$ : la vitesse des ondes P ou S.

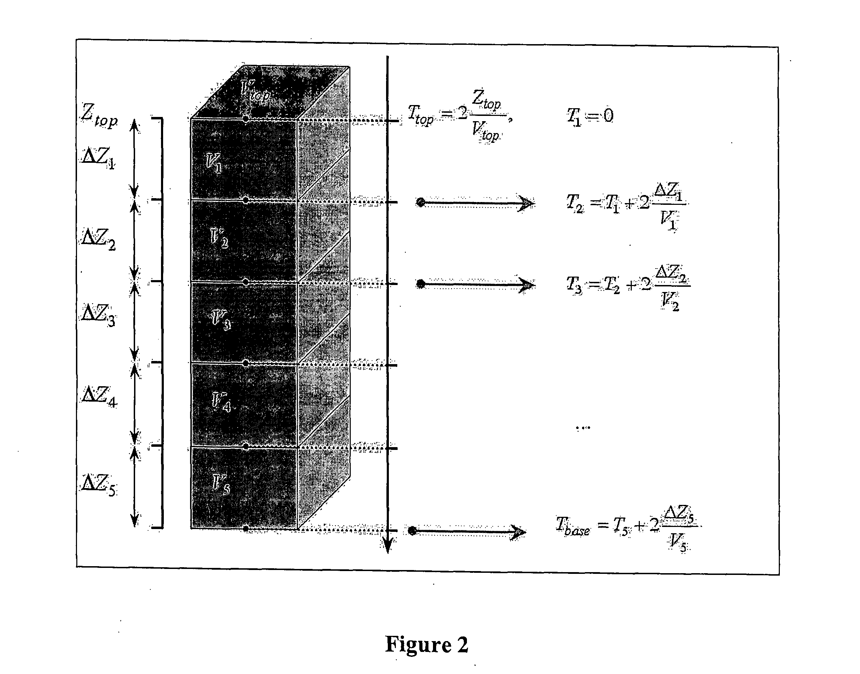

La seconde étape est le calcul des temps de trajet aller-retour au niveau de chaque maille du réservoir. On suppose les vitesses constantes à l'intérieur d'une maille. Par ailleurs, pour un souci pratique, on considère le toit du réservoir comme origine des temps : d'une part, cela allège les calculs et d'autre part, si l'on veut les temps totaux (sous-sol et réservoir), il suffira de sommer le cube 3D ainsi obtenu et le tableau 2D issu de la première étape. Là encore, on ne dispose pas d'une loi de vitesse exacte. Le calcul s'effectue donc comme illustré sur la figure 2.

La dernière étape est le calcul des temps de trajet aller-retour sur l'ensemble du réservoir : il s'agit donc ici d'une carte 2D, qui servira grandement lors de la phase de calage.

### 3) Filtrage du modèle pétro élastique en temps

Comme le modèle géologique est à plus haute fréquence que la sismique, il est maintenant nécessaire de se ramener dans la bande de fréquences de la sismique. On effectue pour cela un filtrage des impédances de compression et de cisaillement issues du modèle pétro élastique [34]. La fonction de filtrage choisie (filtre de Martin) permet l'utilisation d'un filtre passe-bande, coupe-bande, passe-bas ou passe-haut.

Cependant l'étape précédente a introduit une légère difficulté puisque la conversion profondeur/temps a conduit à une discrétisation irrégulière en temps. Un rééchantillonnage des impédances a donc été implémenté. Il s'agit tout simplement d'une interpolation d'ordre 1 entre le toit du réservoir ($T_1$ = 0) et le temps de trajet sur l'ensemble du réservoir ($T_{base}$ calculé lors de la conversion). Un pas d'échantillonnage (0,1 ms) très inférieur à celui des données sismiques (2 ms en général) a été choisi afin d'avoir une grande précision lors du filtrage.

Une fois le filtrage effectué, on se ramène à la résolution des données sismiques (en général entre 4 et 2 ms) en sous échantillonnant les traces obtenues.

### 2- Le module inverse

La figure 3 illustre les différentes étapes du module inverse.

Cette section a pour objectif de présenter les différentes techniques utilisées lors du processus d'optimisation : paramétrage, calcul des poids, formulation de la fonction objectif, techniques d'optimisation.

### A)- Détermination d'une opération de paramétrage des modèles géostatistiques

L'opération de paramétrage des modèles géostatistiques est un point fondamental pour garantir le succès de la phase d'intégration des données dans les modèles géologiques. En effet, la mise à jour des modèles géologiques par les données dynamiques repose sur la résolution d'un problème inverse. Le choix des paramètres à caler apparaît dès lors comme essentiel pour rendre possible la minimisation de la fonction objectif, qui mesure l'écart entre les données observées sur le terrain et les résultats de simulation.

Dans cet exemple, on utilise une méthode particulière pour générer et transformer des réalisations géostatistiques : il s'agit d'une combinaison de deux méthodes (FFT-MA [35] et déformations graduelles) développées à l'Institut Français du Pétrole qui sépare la génération du bruit blanc et l'imposition d'une fonction de covariance. On peut ainsi appliquer la méthode des déformations graduelles de façon locale ou globale [24, 25, 26]. Ce choix a été effectué pour des raisons de stabilité, de rapidité et de réduction du nombre de paramètres à considérer pour l'optimisation (alors égal au nombre de paramètres de déformations graduelles quelle que soit la taille du maillage).

Une chaîne de déformation [36, 39, 40] est alors initiée à partir d'un nombre important de bruits blancs Gaussiens, chaque bruit blanc supplémentaire étant associé à un nouveau paramètre de déformation graduelle. Ceci permet d'explorer de manière plus large l'espace des bruits blancs.

B)- Recalage du modèle pétro élastique après conversion profondeur/temps : "Squeeze / Stretch")

Cette étape est d'une importance cruciale pour la cohérence des calculs. En effet, rien ne garantit que lors d'un processus de calage, la conversion Profondeur/Temps fournisse une carte de temps de trajet sur l'ensemble du réservoir identique à la référence. On dispose donc de deux jeux de données avec le même nombre de valeurs et sensés être échantillonnées de la même façon. Ce dernier point n'étant pas forcément vérifié, l'idée est de contraindre le temps de trajet sur l'ensemble du réservoir, après l'étape de conversion Profondeur/Temps.

Lors du processus de calage, on génère un modèle géologique inexact, ce qui conduit à des vitesses sismiques inexactes (cf. module direct) et par conséquent, un décalage en temps peut apparaître. Il devient alors nécessaire de contraindre l'épaisseur en temps du réservoir calculée pour la faire correspondre à celle de référence. Ainsi, on maintient les temps de trajet simulés proches des temps de trajet mesurés et il devient alors cohérent de comparer les impédances simulées avec les impédances de référence.

C)- Définition d'une fonction objectif

La mise à jour du modèle géologique par les données dynamiques dépend de la minimisation d'une fonction objectif mesurant l'erreur entre les données observées (données de production et de sismique 4D) et les résultats de simulation obtenus pour une valeur fixée des paramètres θ.

Plusieurs formulations sont envisageables mais celle au sens des moindres carrés est la plus couramment utilisée dans le domaine pétrolier. Dans le cas présent, la fonction objectif s'écrit de la façon suivante :

$$F(\theta) = \frac{1}{2} \frac{2}{nb_{s\acute{e}rie}} \sum_{i=1}^{nb_{s\acute{e}rie}} \frac{1}{nb_{mesure}^i} \sum_{j=1}^{nb_{mesure}^i} \left( \frac{obs_j^i - simu_j^i(\theta)}{\sigma_j^i} \right)^2 \qquad (2.1)$$

avec :

- ■ $\theta = (\theta_1, ..., \theta_n)$ le vecteur des paramètres de calage,
- ■ $nb_{s\acute{e}rie}$ le nombre de séries, une série étant un type de données (par ex. : Water Cut, Ip à T0,...),
- ■ $nb_{mesure}^i$ le nombre de mesures pour la série i,
- ■ $obs_j^i$ la $j^{i\grave{e}me}$ donnée mesurée de la série i,
- ■ $simu_j^i(\theta)$ le résultat de simulation pour la $j^{i\grave{e}me}$ donnée mesurée de la série i,
- ■ $\sigma_j^i$ : la variance de la $j^{i\grave{e}me}$ donnée mesurée de la série i.

Sous forme matricielle, on obtient :

$$F(\theta) = \left( Obs - Sim(\theta) \right)^T C_{obs}^{-1} \left( Obs - Sim(\theta) \right) \qquad (2.2)$$

avec :

- ■ *Obs* le vecteur des données mesurées,
- ■ *Sim* le vecteur des résultats de simulation,
- ■ et $C_{obs}$ la matrice de covariance pondérée (c'est une matrice diagonale).

D)- Définition d'une technique d'optimisation

Dans la boucle d'inversion, les algorithmes d'optimisation utilisés sont basés sur des méthodes de gradients [1,2,5,43,46], qui améliorent significativement les performances du processus. Les gradients fournissent directement une direction de descente après chaque simulation.

Notons que ces méthodes d'optimisation convergent vers un optimum local proche de la valeur initiale des paramètres utilisés. Il est par conséquent judicieux d'ajuster les valeurs initiales aussi bien que possible et d'analyser l'influence du point de départ de l'optimisation, par exemple, en menant des études de sensibilité ou en procédant à une optimisation séquentielle.

Diverses méthodes d'optimisation sont utilisées dans l'industrie pétrolière. A titre d'exemple, nous citerons la méthode de plus profonde descente, la méthode de Fletcher-Powell, la méthode de Levenberg-Marquardt, la méthode de Gauss-Newton et la méthode BFGS. Les ouvrages de Chavent [13], Dennis [16] et Fletcher [20] consacrent un exposé détaillé à ces méthodes. Les algorithmes d'optimisation non-linéaire permettent de calculer, selon un processus itératif, une valeur $\theta^{opt}$ des paramètres $\theta$ qui minimise la fonction objectif $F$ que nous souhaitons optimiser, ce qui permettra un meilleur calage des données.

L'itération (k+1) d'un tel algorithme a pour but de déterminer une nouvelle estimation des paramètres $\theta$ selon le principe suivant : $\theta^{(k+1)} = \theta^{(k)} + t^{(k)}s^{(k)}$,

■ Calcul d'une direction : la direction $s^{(k)}$ est solution d'un problème linéarisé en $\theta^{(k)}$. La formulation de ce problème repose sur les résultats de simulation et sur leurs dérivées par rapport à la paramétrisation, à savoir :

$$D\left(\theta^{(k)}\right) \quad \text{et} \quad \frac{\partial \mathrm{D}\left(\theta^{(k)}\right)}{\partial \theta},$$

■ Recherche linéaire : le pas $t^{(k)}$ est calculé pour satisfaire la relation de descente : $F(\theta^{(k)} + t^{(k)}s^{(k)}) < F(\theta^{(k)})$.

## Revendications

1. Méthode permettant de prédire la production d'un réservoir souterrain, comportant la génération d'un modèle géologique paramétré à partir de mesures sismiques en temps et de mesures de production, ledit modèle géologique étant mis à jour par un processus d'inversion, **caractérisé en ce que** la méthode comporte les étapes suivantes :

    a) on simule des données dynamiques de production à partir dudit modèle géologique et d'un simulateur d'écoulement ;
    b) on simule un modèle pétro élastique en profondeur à partir dudit modèle géologique et de ladite simulation d'écoulement ;
    c) on détermine un modèle de conversion profondeur/temps.
    d) on convertit ledit modèle pétro élastique en temps ;
    f) on optimise ledit modèle géologique en comparant, à l'aide d'une fonction objectif, lesdites mesures de production et de sismiques en temps audites réponses en production et audits attributs sismiques en temps simulées en mettant à jours au moins le modèle de conversion profondeur/temps;
    g) on recommence à l'étape a) jusqu'à obtenir un minimum pour la fonction objectif.
    h) on prédit la production dudit réservoir souterrain à partir de simulation d'écoulement réalisées à partir dudit modèle géologique optimisée.

2. Méthode selon la revendication 1, dans laquelle ledit modèle pétro élastique en temps est ajusté par correction d'un décalage induit par la conversion profondeur/temps.

3. Méthode selon l'une des revendications précédentes, dans laquelle les données dynamiques sont des données de production du réservoir, de pression et de saturation.

4. Méthode selon l'une des revendications précédentes, dans laquelle ledit modèle pétro-élastique comporte des données issues de sismique 4D.

EP 1 728 967 A1

**1**

Modèle géologique : facies

**2**

Modèle pétro-physique fin : $\varphi$, $k$

Modèle pétro- élastique fin : $K_M$ - $K_{Gr}$ - $\mu$ - $\rho_{Gr}$

**3**

Upscaling

**3**

Downscaling

Simulation pétro-élastique **5**

Modèle pétro-physique grossier : $\phi$, $K$

Upscaling latéral

Conversion Z/T **6**

**4**

Simulation écoulement

Pression/Saturation
Pression/Saturation
*Pression/Saturation*

Squeeze / Stretch

Filtrage Échantillonnage **7**

Données de production simulées

$I_p$ - $I_s$ (Temps) et $T_p$ simulés

**Figure 1**

Figure 2

EP 1 728 967 A1

Paramétrisation

Optimisation

Module direct

Fonction objectif

10

Données de production de référence

$I_p - I_s$ (Temps) et $T_p$ de référence

**Figure 3**

**Office européen des brevets**

## RAPPORT DE RECHERCHE EUROPEENNE

Numéro de la demande

EP 06 29 0751

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | SYLVAIN TOINET: "4D feasibility and calibration using 3D seismic modeling of reservoir models" SOCIETY OF PETROLEUM ENGINEERS, vol. SPE, no. 88783, 10 octobre 2004 (2004-10-10), - 13 octobre 2004 (2004-10-13) pages 1-4, XP002364414 Abu Dhabi * page 2, colonne 1; figure 1 * ----- | 1-4 | INV. E21B41/00 |
| Y | US 5 798 982 A (HE ET AL) 25 août 1998 (1998-08-25) * colonne 5, ligne 10 - colonne 9, ligne 15 * ----- | 1-4 | |
| Y | WO 2005/019866 A (WESTERNGECO, L.L.C) 3 mars 2005 (2005-03-03) * page 1, ligne 17 - ligne 39 * ----- | 2 | |
| D,A | M. MEZGHANI, A. FORNEL, V. LANGLAIS, N. LUCET: "History matching and quantitative use of 4D seismic data for an improved reservoir characterization" SOCIETY OF PETROLEUM ENGINEERS, vol. SPE, no. 90420, 26 septembre 2004 (2004-09-26), - 29 septembre 2004 (2004-09-29) pages 1-10, XP002364415 Houston * figures 1,3 * ----- | 1 | **DOMAINES TECHNIQUES RECHERCHES (IPC)** E21B G01V |
| A | O. GOSSELIN ET ALL.: "History matching using time-lapse seismic (HUTS)" SOCIETY OF PETROLEUM ENGINEERS, vol. SPE, no. 84464, 5 octobre 2003 (2003-10-05), - 8 octobre 2003 (2003-10-08) pages 1-15, XP002364416 Denver * figures 1-3 * ----- | 1 | |

Le présent rapport a été établi pour toutes les revendications

| Lieu de la recherche | Date d'achèvement de la recherche | Examinateur |
|---|---|---|
| La Haye | 12 septembre 2006 | Dantinne, Patrick |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 0751

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

12-09-2006

| Document brevet cité au rapport de recherche | | Date de publication | Membre(s) de la famille de brevet(s) | | | Date de publication |
|---|---|---|---|---|---|---|
| US 5798982 | A | 25-08-1998 | AT | 215704 | T | 15-04-2002 |
| | | | AU | 715911 | B2 | 10-02-2000 |
| | | | AU | 2926397 | A | 19-11-1997 |
| | | | CA | 2251749 | A1 | 06-11-1997 |
| | | | DE | 69711617 | D1 | 08-05-2002 |
| | | | EP | 0896677 | A1 | 17-02-1999 |
| | | | WO | 9741456 | A1 | 06-11-1997 |
| WO 2005019866 | A | 03-03-2005 | EP | 1660913 | A2 | 31-05-2006 |
| | | | US | 2005038604 | A1 | 17-02-2005 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **F. ANTERION.** History matching: a one day long competition: classical approaches versus gradient method. *First international forum on reservoir simulation,* 1998
- **F. ANTERION ; R. EYMARD ; B. KARCHER.** Use of Parameter Gradients for Reservoir History Matching. *Symposium on Reservoir Simulation of the Society of Petroleum Engineers,* 1989
- **U. G. ARAKTINGI ; W. M. BASHORE.** Effects of properties in seismic data on reservoir characterization and consequent fluid flow predictions when integrated with well logs. *SPE 24752, 67th Annual Technical Conference and Exhibition,* 1992
- **A. BAMBERGER ; G. CHAVENT ; P. LAILLY.** Une application de la théorie du contrôle à un problème inverse de sismique. *Les annales de Géophysique,* 1977, vol. 3
- **R. BISSEL.** Calculating Optimal Parameters for History Matching. *4th European Conference on the Mathematics of Oil Recovery,* 1994
- **R. BISSEL ; J. E. KILLOUGH ; Y. SHARMA.** Reservoir history matching using the method of gradients on a workstation. *SPE 24265,* 1992
- **C. BOGAN ; D. JOHNSON ; M. LITVAK ; D. STAUBER.** Building reservoir models based on 4D seismic and well data in Gulf of Mexico oil fields. *Annual Technical Conference and Exhibition,* 2003
- **J. BRAC ; P. Y. DÉQUIREZ ; F. HERVÉ ; C. JACQUES ; P. R. V. LAILLY ; D. TRAN VAN HIEU.** Inversion with a priori information: an approach to integrated stratigraphic interpretation. *58th Annual International SEG Meeting,* 1988
- **P. CARRION.** *Inverse problems and tomography in acoustics and seismology,* 1987
- **J. CÉA.** *Optimisation : théories et algorithmes,* 1971
- **M. CHARARA ; I. MAGNIANT ; Y. MANIN ; J.-P. DELHOMME ; N. EBERLÉ.** The benefit of coupling geophysical inversion problems with fluid flow simulation. *ECMOR,* 2000, vol. VII
- Analyse fonctionnelle et identification des coefficients répartis dans les équations aux dérivées partielles. **G. CHAVENT.** PhD Thesis. Université Paris VI, 1971
- **G. CHAVENT.** *Identifiability of parameters in output least square formulation,* 1987
- **G. CHAVENT ; M. DUPUY ; P. LEMONNIER.** History matching by use of optimal theory. *SPE 4627,* 1973
- Intégration de données dynamiques dans un modèle géostatistique de réservoir. **L. COSTA-REIS ; G. DE MARSILY ; R. ESCHARD.** PhD Thesis. Université Paris VI, 2000
- **J.-E. DENNIS ; R.-B. SCHNABEL.** *Numerical Methods for Unconstrained Optimization and Non-Linear Equation,* 1983
- **P. Y. DEQUIREZ ; V. RICHARD.** Application of Inversion to Integrated Stratigraphic Interpretation. *Revue de l'Institut Français du pétrole,* 1990, vol. 45, 397, 416
- Inversion de formes géologiques en ingénierie de gisements en utilisant les données de production. **P.F. EDOA.** PhD Thesis. Université Paul Sabatier, 1999
- **G. S. FEITOSA ; L. CHU ; L. G. THOMPSON ; A. C. REYNOLDS.** Determination of permeability distribution from well test pressure data. *SPE 26047,* 1993
- **R. FLETCHER.** *Practical Methods of Optimization,* 1987
- **F. GASSMANN.** Über die Elastiztät Poröser Medien. *Vierteljahrresschr.Naturforschung Gesellschaft,* 1951, vol. 96, 1-23
- **O. GOSSELIN ; A. COMINELLI ; S. VAN DER BERG ; S.-D. CHOWDHURY.** A gradient-based approach for history matching og both production and 4D seismic data. *ECMOR VII,* 2000
- **D. GUÉRILLOT ; W. BEYDOUN.** Reservoir boundary identification from seismic imaging for well test analysis. *SPE 26463, 68th Annual Technical Conference and Exhibition,* 1993
- **L.-Y. HU.** Gradual deformation and iterative calibration of Gaussian-related Stochastic Models. *Mathematical Geology,* 2000, vol. 32, 87-108
- **L.-Y. HU.** Combinaison of dependent realizations within the Gradual Deformation Method. *Mathematical Geology,* 2002, vol. 34, 953-963
- **L.-Y. HU ; G. BLANC.** Constraining a reservoir facies model to dynamic data using a gradual deformation method. *6th Conference on the Mathematics of Oil Recovery,* 1998
- **P. JACQUARD ; C. JAIN.** Permeability distribution from field pressure data. *SPE Journal,* 1965, 281-294
- **P. JACQUARD ; C. JAIN.** Recherche sur l'interprétation des mesures de pression. *2ème Colloque de l'ARTFP,* 1965

- **J. W. JENNINGS ; D. S. MC GREGOR ; R. A. MORSE.** Simultaneous determination of capillary pressure and relative permeability by automatic history matching. *SPE,* 1988, vol. 14418
- **A.-G. JOURNEL ; DEUTSCH C.-V.** Power Averaging for block effective permeability. SPE. *56th California Regional Meeting of the Society of Petroleum Engineers,* 1986, vol. 15128
- **V. KRETZ ; M. LE RAVALEC-DUPIN ; F. ROGGERO.** An integrated reservoir characteriztion study matching production data and 4D seismic. *Annual Technical Conference and Exhibition,* 2002
- **G. KRUNETZ.** Quelques exemples d'analyse d'enregistrements sismiques. *Geophysical Prospecting,* 1963, vol. 11, 409-422
- **J. LANDA ; R. HORNE.** A procedure to integrate well test data, reservoir performance history and 4D Seismic information into a reservoir description. SPE. *Annual Technical Conference and Exhibition,* 1997, vol. 38653
- **M. LAVERGNE.** Méthodes sismiques. *Ecole Nationale Supérieure du Pétrole et des Moteurs,* 1986
- **M. LE RAVALEC ; NOETINGER BENOÎT ; L.-Y. HU.** The FFT Moving Average (FFT-MA) generator : an efficient numerical method for generating and conditioning Gaussian Simulation. *Mathematical Geology,* 2000, vol. 32, 701-723
- **M. LE RAVALEC-DUPIN ; B. NOETINGER.** Optimization with the Gradual Deformation Method. *Mathematical Geology,* 01 Février 2002, vol. 34 (2), 125-142
- **J. L. LIONS.** *Contrôle optimal de systèmes gouvernés par des équations aux dérivées partielles,* 1968
- **F. MANSANNÉ.** Algorithmes génétiques : Applications à l'inversion sismique et à l'extrapolation. *PhD Thesis,* 2000
- **M. MEZGHANI ; A. FORNEL ; V. LANGLAIS ; N. LUCET.** History Matching and Quantitative Use of 4D Seismic Data for an Improved Reservoir. *SPE,* 2004, vol. 90420
- **M. MEZGHANI ; A. FORNEL ; V. LANGLAIS ; N. LUCET.** *Quantitative Use of 4D Seismic Data For Geological Modeling & Reservoir Characterization Through History Matching,* 2004
- **M. MEZGHANI ; F. ROGGERO ; J. P. RAYMOND.** Optimal location of pilot points in history matching. *ECMOR,* 2000, vol. VII
- **R. W. NELSON.** In place measurement of permeability in heterogeneous media; Theory of a proposed method. *Geophys.Res.,* 1960, vol. 66 (5), 2469-2478
- **D. RAHON ; G. BLANC ; D. GUÉRILLOT.** Gradient method constrained by geological bodies for history matching. *SPE,* 1996, vol. 36568
- **R. RAMAMOORTHY ; W. F. MURPHY ; C. COLL.** Total Porosity Estimation in Shaly Sands From Shear Modulus. *SPWLA 36th Annual Logging Symposium Transactions.,* 1995
- **P. RENARD ; G. DE MARSILY.** Calculating Equivalent Permeability : a Review. *Advances in Water Ressources,* 1997, vol. 20 (5-6), 253-278
- **F. ROGGERO ; D. GUÉRILLOT.** Gradient Method and Bayesian Formalism - Application to Petrophysical Parameter Characterization. *5th ECMOR,* 1996
- **S. RONEN ; C. ECONOMIDES ; VARVIK.** Synergetic interpretation of well tests and seismic data for reservoir characterization. *54th EAEG Meeting,* 1992
- **B. H. RUSSEL.** Introduction to seismic inversion methods. *SEG,* 1988
- **A. TARANTOLA.** Inverse Problem Theory: Method for Data Fitting and Model Parameter Estimation. Elseiver, 1987
- **X. H. WEN ; J. J. HERNANDEZ.** Upscaling Hydraulic Conductivities in Heterogeneous Media : an Overview. *Journal of Hydrology,* 1996, vol. 183, 9-32
- **T. YAO ; A.-G. JOURNEL.** Porosity modeling in a W. Texas carbonate reservoir conditionned to seismic data: solving the difference of scale problem. *SPE, Annual Technical Conference and Exhibition,* 1998
- **I. ZABALZA ; G. BLANC ; D. COLLOMBIER ; M. MEZGHANI.** Use of experimental design in resolving inverse problems - Application to history matching. *ECMOR,* 2000, vol. VII